# EUROPEAN PATENT APPLICATION

(11) **EP 2 394 857 A1**
(43) Date of publication of application: **14.12.2011**
(21) Application number: 10005900.5
(22) Date of filing: 08.06.2010
(51) Int. Cl.: B60R 11/02

(54) **Automotive remote controlled citizen band radio system**

(71) Applicant: TTI Tech. Co., Ltd., Gangnam-gu Seoul 135-960 (KR)
(72) Inventor: Kim, Nam Yeon, Gaepo-dong, Gangnam-gu Seoul 135-960 (KR)
(74) Representative: Verscht, Thomas Kurt Albert

(57) **Abstract**

The present invention relates to an automotive remote controlled Citizen Band (CB) radio system. The system includes a main body (100) for receiving voice signals from a microphone (300), transmitting the voice signals to a radio of some other party, receiving voice signals from the radio of the other party, and outputting the voice signals. A remote body (200) includes a display unit (204) for outputting various types of information, and is configured to transmit or receive information and signals to or from the main body (100) and output received information to the display unit (204). The microphone (300) receives voice signals and transmits the voice signals to the main body (100).
Accordingly, a small-sized LCD unit (204) is installed separately from a main body (100) and a remote control unit is also installed, thus enabling a radio system to be more efficiently mounted and providing a convenient usage environment in the limited interior space of a vehicle.

## Description

### BACKGROUND OF THE INVENTION

### 1. Field of the Invention

The present invention relates, in general, to an automotive remote controlled Citizen Band (CB) radio system, and, more particularly, to an automotive remote controlled CB radio system, in which a small-sized Liquid Crystal Display (LCD) unit is installed separately from a main body, and a remote control unit capable of controlling the operation of the main body is also installed, thus enabling a radio system to be more efficiently mounted and providing a convenient usage environment in the interior space of a vehicle which is complicated and limited due to the provision of various automotive electronic products.

### 2. Description of the Related Art

The present invention relates to an automotive remote controlled Citizen Band (CB) radio system.

Automotive Citizen Band (CB: 25-30 MHz) radios are products, which do not charge spectrum fees unlike radios using other frequency bands, and which can be freely used by anyone without obtaining separate permission. Automotive CB radios are radios enabling multicast communication which are mounted on and used by most trucks for logistics services all over the entire world including America and Europe, and which have been widely used as a useful and efficient means of communication even in various types of vehicles for business purposes and for the benefit of the passengers. That is, automotive CB radios are pieces of radio equipment capable of exchanging useful information such as various types of real-time traffic information about the road, the condition of the road, weather fluctuations, and notifications about emergencies, with drivers.

In the case of automotive radios, countries have their respective and various national standards concerning the use of frequency bands, allowable modulation methods, allowable output power, etc., and thus technology for developing general purpose products that can be used in common in all countries by overcoming the different standards has emerged as an essential object. For example, in the case of trucks for logistics services passing through various countries while crossing over the European continent, problems may occur regarding the mutual communication between radios currently being used when moving between individual countries. In order to solve these problems, the entire band of low-band frequencies ranging from 25MHz to 30MHz used all over the world must be covered, and, simultaneously, various standards and performances related to individual countries must also be complied with. In particular, the development of circuits and software using new concepts, which enable the realization of excellent reception (Rx) sensitivity over all wideband frequency ranges, is absolutely required. In the midst of a situation wherein the development of technology and the monopolization of markets by advanced countries to cope with the demands of industry related to radios requiring such commoditization have accelerated, the development of wideband and integrated radios which are provided with functionality, convenience and technical features and which use independent technology even in Korea is an urgent development project which can contribute to the epoch-making development of an export-leading automotive radio industry based on technical supremacy.

Further, pertaining to the use of radios in vehicles, more safe and convenient functions have been emphasized, and Europe including the European Union (EU) recommends the use of hands free systems when drivers use radios while driving. In Spain, the installation of hands free systems is obligatory, but radios equipped with the hands free functionality have not yet been developed. Further, separate hands free systems for radios which have been previously sold have serious compatibility problems amongst the various types of radios. In addition, since the individual hands free systems are incapable of working in conjunction with main bodies using software (S/W), they have fatal disadvantages in that only voice can be operated and other essential functions cannot be performed, and are thus being disfavored by markets.

Further, in this situation wherein methods of more efficiently mounting and conveniently using radios in the interior space of a vehicle which is complicated and limited due to the provision of various automotive electronic products have been frequently required, communication devices from all over the world must be generally manufactured as products emphasizing small size, convenience and commoditization. In particular, since the field of automotive radios is a field requiring safety in addition to the above requirements, products absolutely have to be implemented as integrated systems in which a hands free unit is implemented using a remote control unit and various and convenient functions can be remotely manipulated using a separate Liquid Crystal Display (LCD) unit.

However, according to domestic patent research, technologies based on the concept of simply adding functions to existing devices, for example, technology which adds a radio function to the radio set of a vehicle by adding a family radio circuit to the radio set portion of the vehicle (20-2003-0064641) and technology which adds the function of a family radio to an automotive hands free unit for mobile phones (20-2000-0023934, 20-2000-0023934 and 20-2001-0032085), have been mainly developed from the standpoint of the utilization of family radios since the early part of 2000.

### SUMMARY OF THE INVENTION

Accordingly, the present invention has been made keeping in mind the above problems occurring in the prior art, and an object of the present invention is to provide a remote-controlled automotive Citizen Band (CB) radio system, in which an LCD unit equipped with a small-sized LCD is installed separately from the main body of a radio, thus enabling the radio to be more efficiently mounted and providing a convenient usage environment in the interior space of a vehicle which is complicated and limited due to the provision of various automotive electronic products.

Another object of the present invention is to provide an automotive remote controlled CB radio system, in which a remote control unit is separately installed at a convenient location without a microphone or a main body being directly manipulated, and various types of operations such as sound control, channel selection and mode selection are controlled by the remote control unit, in order to satisfy the fact that safety is further required during the driving of a vehicle, thus enabling driving to be more safe.

A further object of the present invention is to provide an automotive remote controlled CB radio system, in which an LCD unit equipped with a small-sized LCD is separately installed, and a dual CPU, implemented together with the CPU of a main body, is developed and mounted on the LCD unit, so that a load of cables between the LCD unit and the main body is reduced, thus perfectly eliminating noise or interference that may occur during transmission over the cables.

Yet another object of the present invention is to provide an automotive remote controlled CB radio system, in which an authentic hands free unit is implemented by adding a Voice Operated Switch (VOX) function and operating in conjunction with a hands free microphone, thus improving safety during the driving of a vehicle.

In order to accomplish the above objects, the present invention provides an automotive remote controlled Citizen Band (CB) radio system, comprising a main body for receiving voice signals from a microphone, transmitting the voice signals to a radio of some other party, receiving voice signals from the radio of the other party, and outputting the received voice signals; a remote body including a display unit for outputting various types of information, the remote body transmitting or receiving information and signals to or from the main body, and outputting received information to the display unit; and the microphone for receiving voice signals and transmitting the voice signals to the main body.

Preferably, the automotive remote controlled CB radio system further comprises a hands free microphone for receiving voice signals and transmitting the voice signals to the main body.

Preferably, the microphone is a hands free microphone.

Preferably, thee remote body comprises a mode setting unit for setting a Voice Operated Switch (VOX) ON/OFF mode so that the voice signals input to the hands free microphone are automatically sensed and are transmitted to the radio of the other party, and generating a VOX ON/OFF signal when the VOX ON/OFF mode has been set; a Central Processing Unit (CPU) for receiving the VOX ON/OFF signal from the mode setting unit and requesting a data mediation unit to transmit the VOX ON/OFF signal to the main body; and the data mediation unit for, when it is requested by the CPU to transmit the VOX ON/OFF signal to the main body, transmitting the VOX ON/OFF signal to a data mediation unit of the main body, and the main body comprises the data mediation unit for receiving the VOX ON/OFF signal from the data mediation unit of the remote body and transmitting the VOX ON/OFF signal to a CPU; the CPU for, when the VOX ON/OFF signal is received from the data mediation unit of the main body, if the VOX ON/OFF signal is a VOX ON signal, requesting a voice signal input unit to switch a state to a reception waiting state so that the voice signals from the hands free microphone can be received, whereas if the VOX ON/OFF signal is a VOX OFF signal, requesting the voice signal input unit to be released from the reception waiting state; and the voce signal input unit for, when it is requested by the CPU to switch the state to the reception waiting state, switching its state to the reception waiting state, and receiving the voice signals from the hands free microphone.

Preferably, automotive remote controlled CB radio system further comprises a control body for generating a control signal required to control an operation of the main body and transmitting the control signal to the main body.

Preferably, the main body comprises a control signal reception unit for receiving a Push-to-Talk (PTT) signal from the microphone and transmitting the PTT signal to a CPU; the CPU for, when the PTT signal is received from the control signal reception unit, requesting a voice signal input unit to receive voice signals which are to be transmitted to the radio of the other party; and the voice signal input unit for, when it is requested by the CPU to receive the voice signals, switching a mode to a voice signal reception mode, and receiving the voice signals, and the microphone is configured to generate the PTT signal and transmit the PTT signal to the control signal reception unit of the main body, and is configured to receive the voice signals which are to be transmitted to the radio of the other party, and transmit the voice signals to the voice signal input unit when the voice signal input unit switches its mode to the voice signal reception mode in response to the PTT signal.

Preferably, the automotive remote controlled CB radio system further comprises a control body for generating a PTT signal and transmitting the PTT signal to the main body, wherein the main body comprises a control signal reception unit for receiving the PTT signal from the control body and transmitting the PTT signal to a CPU; the CPU for, when the PTT signal is received from the control signal reception unit, requesting a voice signal input unit to switch a state to a reception waiting state so that voice signals to be transmitted to the radio of the other party can be received from the hands free microphone; and the voice signal input unit for, when it is requested by the CPU to switch the state to the reception waiting state, switching its state to the reception waiting state, and receiving the voice signals from the hands free microphone, and the hands free microphone receives the voice signals, which are to be transmitted to the radio of the other party, and transmits the voice signals to the voice signal input unit when the voice signal input unit switches its mode to a voice signal reception mode.

Preferably, the main body comprises a control signal reception unit for receiving the control signal from the control body and transmitting the control signal to a CPU; the CPU for, when the control signal is received from the control signal reception unit, requesting a data mediation unit to transmit the control signal to the remote body; and the data mediation unit for, when it is requested by the CPU to transmit the control signal to the remote body, transmitting the control signal to the remote body, and the remote body comprises a data mediation unit for receiving the control signal from the data mediation unit of the main body and transmitting the control signal to a CPU; and the CPU for, when the control signal is received from the data mediation unit, setting a mode in response to the control signal, and displaying status information about the mode, which has been set, on the display unit.

Preferably, the remote body comprises a mode setting unit for selecting a radio broadcast channel and frequency and transmitting information about the selected channel and frequency to a CPU; the CPU for displaying the information received from the mode setting unit on the display unit, and requesting a data mediation unit to transmit the information to the main body; and the data mediation unit for transmitting the information, which is requested by the CPU to be transmitted to the main body, to the main body, and wherein the main body comprises a data mediation unit for receiving the information from the data mediation unit of the remote body and transmitting the information to a CPU; the CPU for requesting a radio signal reception unit to receive radio broadcast signals in response to the information received from the data mediation unit, and for, when the radio signal reception unit receives the radio broadcast signals, requesting the radio signal reception unit to output the received radio broadcast signals to a voice signal output unit; the radio signal reception unit for, when it is requested by the CPU to receive the radio broadcast signals, receiving radio broadcast signals corresponding to the channel and frequency information; and the voice signal output unit for, when it is requested by the CPU to output the radio broadcast signals, outputting the radio broadcast signals.

Preferably, the control body generates a control signal required to select a radio channel and frequency, and transmits the control signal to the main body, the remote body is configured such that the CPU thereof sets information about the channel and frequency in response to the control signal received from the data mediation unit of the main body and displays the channel and frequency information on the display unit, and such that when the CPU requests the data mediation unit to transmit the set channel and frequency information to the main body, the data mediation unit transmits the channel and frequency information to the data mediation unit of the main body, and the main body further comprises a radio signal reception unit which is requested by the CPU to receive radio broadcast signals and receives radio broadcast signals corresponding to the channel and frequency information when the data mediation unit receives the channel and frequency information from the data mediation unit of the remote body and transmits the channel and frequency information to the CPU; and a voice signal output unit which is requested by the CPU to output the radio broadcast signals received from the radio signal reception unit, and outputs the radio broadcast signals.

Preferably, the display unit is implemented using a Liquid Crystal Display (LCD) unit.

Preferably, the remote body further comprises a backlight unit for implementing various colors and illuminating the display unit; a mode setting unit for selecting color of the backlight, and transmitting information about the selected color to the CPU; and a CPU for performing processing such that the display unit is illuminated with the color selected according to the color information received from the mode setting unit.

### BRIEF DESCRIPTION OF THE DRAWINGS

FIG. 1 is a block diagram showing an automotive remote controlled CB radio system according to an embodiment of the present invention;
FIG. 2 is a diagram showing the state in which the automotive remote controlled CB radio system according to the embodiment of the present invention is mounted on a vehicle;
FIG. 3 is a diagram showing the display unit of the remote body of the automotive remote controlled CB radio system according to an embodiment of the present invention; and
FIG. 4 is a diagram showing the construction of the automotive remote controlled CB radio system according to an embodiment of the present invention.

### DESCRIPTION OF THE PREFERRED EMBODIMENTS

Detailed items of other embodiments are included in the detailed description and attached drawings.

The above and other objects, features and advantages of the present invention will be more clearly understood from the following detailed description of preferred embodiments taken in conjunction with the accompanying drawings. However, the present invention is not limited by the embodiments and can be implemented in various different forms. Those embodiments are merely intended to make the disclosure of the present invention complete and to completely notify those skilled in the art of the scope of the invention, and the present invention is defined by the scope of the accompanying claims. The same reference numerals are used throughout the different drawings to designate the same or similar components.

Hereinafter, embodiments of an automotive remote controlled CB radio system according to the present invention will be described in detail with reference to the attached drawings.

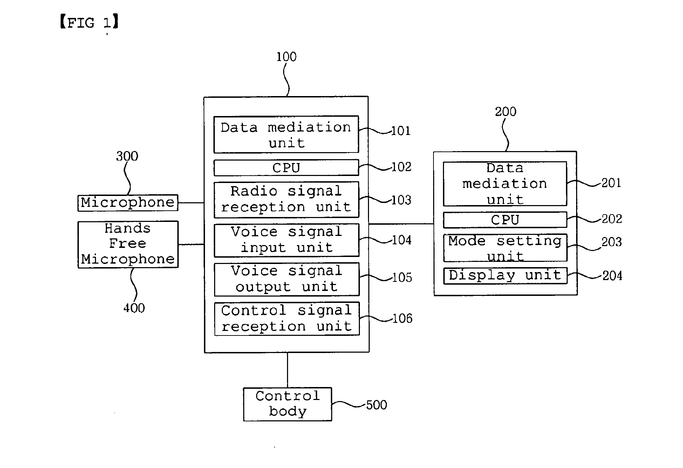

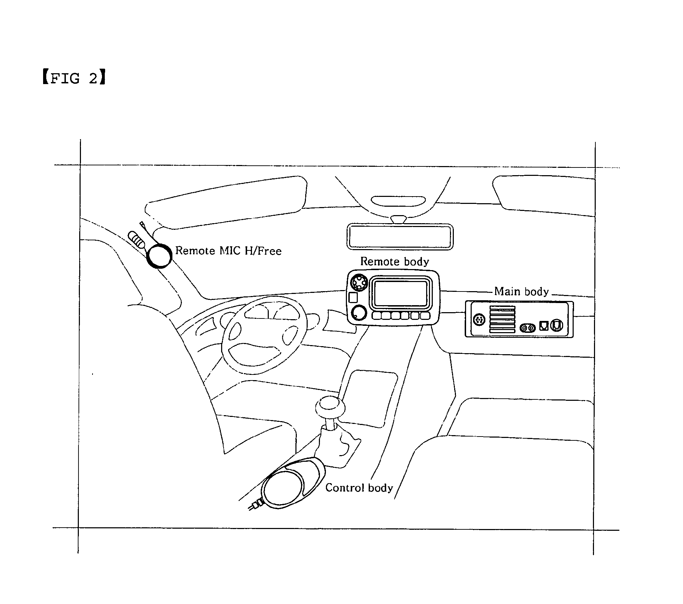

FIG. 1 is a block diagram showing an automotive remote controlled CB radio system according to an embodiment of the present invention. FIG. 2 is a diagram showing the state in which the automotive remote controlled CB radio system according to the embodiment of the present invention is mounted on a vehicle.

The automotive remote controlled CB radio system according to the embodiment of the present invention includes a main body 100, a remote body 200 and a microphone 300.

The main body 100 receives voice signals from the microphone 300, transmits the voice signals to the radio of some other party, receives voice signals from the radio of the other party, and outputs the received voice signals.

Here, the main body 100 preferably includes a data mediation unit 101, a Central Processing Unit (CPU) 102, a radio signal reception unit 103, a voice signal input unit 104, a voice signal output unit 105 and a control signal reception unit 106.

The remote body 200 is configured to include a display unit 204 for outputting various types of information, to transmit or receive information and signals to or from the main body 100, and to output the received information to the display unit 204.

Preferably, the remote body 200 further includes a data mediation unit 201, a CPU 202, and a mode setting unit 203.

Further, the microphone 300 receives voice signals and transmits the voice signals to the main body 100. In this case, the microphone 300 may be a hands free microphone.

Meanwhile, the automotive remote controlled CB radio system according to the present invention preferably further includes a hands free microphone 400 for receiving voice signals and transmitting the voice signals to the main body 100.

The relationship among the remote body 200, the hands free microphone 400 and the main body 100 according to the present invention will be described in detail below with reference to FIGS. 1 and 2.

When the mode setting unit 203 sets a VOX ON/OFF mode so that voice signals which are input to the hands free microphone 400 can be automatically sensed and can be transmitted to the radio of the other party, and generates a VOX ON/OFF signal according to the setting of the VOX ON/OFF mode, the CPU 202 of the remote body 200 receives the VOX ON/OFF signal from the mode setting unit 203, and requests the data mediation unit 201 to transmit the VOX ON/OFF signal to the main body 100.

When the data mediation unit 201 is requested by the CPU 202 to transmit the VOX ON/OFF signal to the main body 100, it transmits the VOX ON/OFF signal to the data mediation unit 101 of the main body 100.

Further, when the data mediation unit 101 of the main body 100 receives the VOX ON/OFF signal from the data mediation unit 201 of the remote body 200 and transmits it to the CPU 102, the CPU 102 of the main body 100 receives the VOX ON/OFF signal from the data mediation unit 101. If the received signal is a VOX ON signal, the CPU 102 requests the voice signal input unit 104 to switch a state to a reception waiting state so that the voice signals from the hands free microphone 400 can be received, whereas if the received signal is a VOX OFF signal, the CPU 102 requests the voice signal input unit 104 to be released from the reception waiting state.

When the voice signal input unit 104 is requested by the CPU 102 to switch the state to the reception waiting state, it switches its state to the reception waiting state, and receives the voice signals from the hands free microphone 400.

Further, the relationship between the microphone 300 and the main body 100 will be described in more detail below with reference to FIGS. 1 and 2.

When the control signal reception unit 106 of the main body 100 receives a Push-to-Talk (PTT) signal from the microphone 300 and transmits the PTT signal to the CPU 102, the CPU 102 receives the PTT signal from the control signal reception unit 106 and requests the voice signal input unit 104 to receive voice signals which are to be transmitted to the radio of the other party.

When the voice signal input unit 104 is requested by the CPU 102 to receive voice signals, it switches its mode to a voice signal reception mode and receives the voice signals.

In this case, the microphone 300 generates a PTT signal and transmits the PTT signal to the control signal reception unit 106 of the main body 100. When the voice signal input unit 104 switches its mode to the voice signal reception mode in response to the PTT signal, the microphone 300 receives voice signals which are to be transmitted to the radio of the other party, and then transmits the voice signals to the voice signal input unit 104.

Preferably, the automotive remote controlled CB radio system according to the present invention further includes a control body 500 for generating a control signal required to control the operation of the main body 100 and transmitting the control signal to the main body 100.

Further, preferably, the control body 500 includes a PTT control unit (not shown) for generating the PTT signal required to transmit voice signals and transmitting the PTT signal to the main body 100, and an operation control unit (not shown) for controlling various types of operations of the main body 100.

Furthermore, the relationship among the control body 500, the hands free microphone 400 and the main body 100 will be described in more detail below with reference to FIGS. 1 and 2.

First, when the control body 500 generates a PTT signal and transmits the PTT signal to the main body 100, the control signal reception unit 106 of the main body 100 receives the PTT signal from the control body 500 and transmits the PTT signal to the CPU 102.

When receiving the PTT signal from the control signal reception unit 106, the CPU 102 requests the voice signal input unit 104 to switch a state to a reception waiting state so that voice signals to be transmitted to the radio of the other party can be received from the hands free microphone 400.

Then, the voice signal input unit 104 switches its state to the reception waiting state, and receives voice signals from the hands free microphone 400.

Here, when the voice signal input unit 104 switches its mode to voice signal reception mode, the hands free microphone 400 preferably receives the voice signals which are to be transmitted to the radio of the other party, and then transmits the voice signals to the voice signal input unit 104.

Furthermore, the relationship among the remote body 200, the control body 500 and the main body 100 will be described in more detail below with reference to FIGS. 1 and 2.

When the control body 500 transmits various types of control signals required to control the operation of the main body 100 to the main body 100, the control signal reception unit 106 of the main body 100 receives the control signals from the control body 500 and transmits the control signals to the CPU 102.

When the control signals are received from the control signal reception unit 106, the CPU 102 requests the data mediation unit 101 to transmit the control signals to the remote body 200.

Then, the data mediation unit 101 transmits the control signals to the remote body 200.

The data mediation unit 201 of the remote body 200 receives the control signals from the data mediation unit 101 of the main body 100 and transmits the control signals to the CPU 202.

When the control signals are received from the data mediation unit 201, the CPU 202 sets various modes in response to the control signals, and displays on the display unit 204 status information about the modes which have been set.

In this case, the control body 500 can generate a control signal required to select a radio channel and frequency and transmit the control signal to the main body 100.

Then, when the control signal reception unit 106 of the main body 100 receives the control signal from the control body 500 and transmits the control signal to the CPU 102, the CPU 102 requests the data mediation unit 101 to transmit the control signal to the remote body 200. The data mediation unit 101 transmits the control signal to the remote body 200.

Further, in the remote body 200, the CPU 202 sets information about the channel and frequency in response to the control signal received through the data mediation unit 101 of the main body 100, and displays the channel and frequency information on the display unit. When the CPU 202 requests the data mediation unit 201 to transmit the channel and frequency information to the main body 100, the data mediation unit 201 transmits the channel and frequency information to the data mediation unit 101 of the main body 100.

Then, when the data mediation unit 101 receives the channel and frequency information from the data mediation unit 201 of the remote body 200 and transmits it to the CPU 102, the radio signal reception unit 103 of the main body 100 is requested by the CPU 102 to receive radio broadcast signals, and then receives radio broadcast signals according to the channel and frequency information.

Further, the voice signal output unit 105 of the main body 100 is requested by the CPU 102 to output the radio broadcast signals received from the radio signal reception unit 103, and then outputs the radio broadcast signals.

Consequently, all operations of the main body 100 can be performed by the control body 500, and various types of operation mode setting information are output to the display unit 204 of the remote body 200, so that the status of the control is monitored via the display unit 204 of the remote body 200 while control is performed via the control body 500 mounted at a convenient location without the direct manipulation of the main body 100, thus enabling driving to be more safe.

Further, the relationship between the remote body 200 and the main body 100 will be described in more detail below with reference to FIGS. 1 and 2.

The mode setting unit 203 of the remote body 200 selects a radio broadcast channel and frequency, and transmits information about the selected channel and frequency to the CPU 202.

The CPU 202 of the remote body 200 displays the information received from the mode setting unit 203 on the display unit 204, and requests the data mediation unit 201 to transmit the information to the main body 100.

The data mediation unit 201 of the remote body 200 transmits the information, requested by the CPU 202 to be transmitted to the main body 100, to the main body 100.

Further, the data mediation unit 101 of the main body 100 receives the information from the data mediation unit 201 of the remote body 200, and transmits the information to the CPU 102.

The CPU 102 of the main body 100 requests the radio signal reception unit 103 to receive radio broadcast signals in response to the information received from the data mediation unit 101. When the radio broadcast signals are received, the radio signal reception unit 103 requests the voice signal output unit 105 to output the received radio broadcast signals.

Then, when the radio signal reception unit 103 is requested by the CPU 102 to receive radio broadcast signals, it receives radio broadcast signals corresponding to the channel and frequency information.

Further, when the voice signal output unit 105 is requested by the CPU 102 to output the radio broadcast signals, it outputs the received radio broadcast signals.

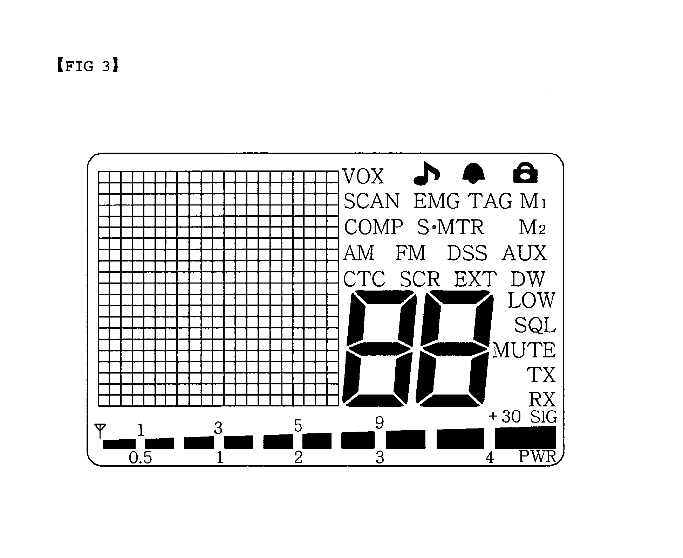

FIG. 3 is a diagram showing the shape of the display unit 204 of the remote body of the automotive remote controlled CB radio system according to an embodiment of the present invention.

The display unit 204 of the remote body 200 of the automotive remote controlled CB radio system according to the embodiment of the present invention is implemented using a Liquid Crystal Display (LCD) unit.

The display unit 204 may further include a backlight unit (not shown) for implementing various colors.

When the mode setting unit 203 of the remote body 200 selects a backlight color and transmits information about the selected color to the CPU 202, the CPU 202 preferably performs processing so that the display unit 204 is illuminated with the color selected according to the color information received from the mode setting unit 203.

Therefore, the LCD unit 204 is illuminated with various colors, thus variously making the indoor atmosphere of the vehicle.

In this case, as described above with regard to the relationship among the remote body 200, the main body 100 and the control body 500, it is possible that the control body 500 can transmit a control signal to the main body 100 so as to select the color of the display unit 204, so that the control signal is transmitted to the remote body 200 through the data mediation unit 101 of the main body 100, thus enabling the CPU 202 of the remote body 200 to change the color of the display unit 204 in response to the control signal from the control body 500.

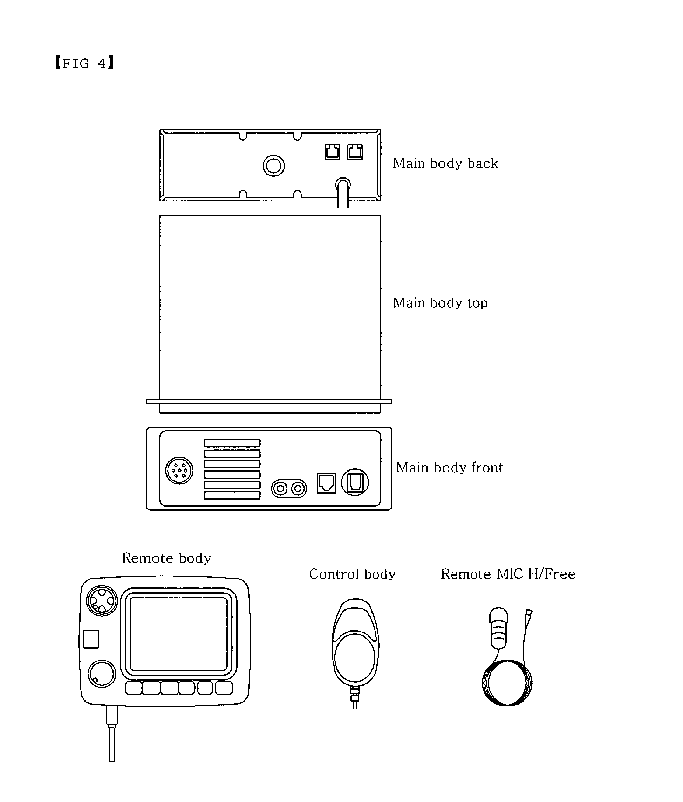

FIG. 4 is a diagram showing the construction of the automotive remote controlled CB radio system according to an embodiment of the present invention.

The main body 100 of the automotive remote controlled CB radio system according to the embodiment of the present invention preferably further includes a front panel (not shown) and a back panel (not shown). Preferably, the front panel is provided with terminals for enabling various types of audio devices such as an MP3 player, the control body 500, the remote body 200, and the hands free microphone 400 to be connected thereto.

Preferably, the rear panel is provided with terminals enabling an antenna (not shown), an external power supply, an external speaker, an S-Meter, the control body 500, and the remote body 200 to be connected thereto.

Preferably, the main body 100 further includes a power supply unit (not shown) connected thereto through an external power connection terminal and configured to receive external power and to supply power to the main body, and an antenna (not shown) configured to receive voice signals from the radio of the other party and transmit the voice signals to the CPU 102.

Preferably, the remote body 200 is configured such that a mounting bracket fixing hole or a concave-convex portion is formed in the back panel thereof to enable the remote body 200 to be easily mounted on a vehicle.

Preferably, the remote body 200 further includes a power supply unit (not shown) for controlling the supply of power and a Dynamic Squelch System (DDS) control unit (not shown).

Preferably, the mode setting unit 203 includes an ordinary mode setting unit (not shown) and a professional mode setting unit (not shown).

Preferably, the ordinary mode setting unit (not shown) enables the selection of Continuous Tone Coded (CTC) tone, the setting of VOX ON/OFF mode, scrambler ON/OFF mode and compander ON/OFF mode, and the selection of frequency bands and backlight color.

Preferably, the professional mode setting unit (not shown) enables the setting of a hands free timer for PTT of the remote body, the selection of key tone ON/OFF mode, the control of backlight brightness, the selection of quick channel up/down, the selection of external connection ON/OFF mode, ID writing, receive timer scan, delay timer scan, and the selection of call tone.

Preferably, the remote body 200 further includes a program mode setting unit (not shown) including buttons P1, M1, P2 and M2 which enable the setting of programs.

As described above, the present invention can provide an automotive remote controlled Citizen Band (CB) radio system, in which an LCD unit equipped with a small-sized LCD is installed separately from the main body of a radio, thus enabling the radio to be more efficiently mounted and providing a convenient usage environment in the interior space of a vehicle which is complicated and limited due to the provision of various automotive electronic products.

Further, the present invention can provide an automotive remote controlled CB radio system, in which a remote control unit is separately installed at a convenient location without a microphone or a main body being directly manipulated, and various types of operations such as sound control, channel selection and mode selection are controlled by the remote control unit, in order to satisfy the fact that safety is further required during the driving of a vehicle, thus enabling driving to be more safe.

Furthermore, the present invention can provide an automotive remote controlled CB radio system, in which an LCD unit equipped with a small-sized LCD is separately installed, and a dual CPU, implemented together with the CPU of a main body, is developed and mounted on the LCD unit, so that a load of cables between the LCD unit and the main body is reduced, thus perfectly eliminating noise or interference that may occur during transmission over the cables.

Furthermore, the present invention can provide an automotive remote controlled CB radio system, in which an authentic hands free unit is implemented by adding a Voice Operated Switch (VOX) function and operating in conjunction with a hands free microphone, thus improving safety during the driving of a vehicle.

The invention may be summarized as follows: The present invention relates to an automotive remote controlled Citizen Band (CB) radio system. The system includes a main body for receiving voice signals from a microphone, transmitting the voice signals to a radio of some other party, receiving voice signals from the radio of the other party, and outputting the voice signals. A remote body includes a display unit for outputting various types of information, and is configured to transmit or receive information and signals to or from the main body and output received information to the display unit. The microphone receives voice signals and transmits the voice signals to the main body.

Accordingly, a small-sized LCD unit is installed separately from a main body and a remote control unit is also installed, thus enabling a radio system to be more efficiently mounted and providing a convenient usage environment in the limited interior space of a vehicle.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Therefore, the above-described embodiments should be understood to be exemplary rather than restrictive. The scope of the present invention is defined by the accompanying claims rather than the detailed description, and all changes or modifications derived from the meaning, scope and equivalents of the claims should be interpreted as being included in the scope of the present invention.

## Claims

1. An automotive remote controlled Citizen Band (CB) radio system, comprising:
a main body for receiving voice signals from a microphone, transmitting the voice signals to a radio of some other party, receiving voice signals from the radio of the other party, and outputting the received voice signals;
a remote body including a display unit for outputting various types of information, the remote body transmitting or receiving information and signals to or from the main body, and outputting received information to the display unit; and
the microphone for receiving voice signals and transmitting the voice signals to the main body.

2. The automotive remote controlled CB radio system according to claim 1, further comprising a hands free microphone for receiving voice signals and transmitting the voice signals to the main body.

3. The automotive remote controlled CB radio system according to claim 1, wherein the microphone is a hands free microphone.

4. The automotive remote controlled CB radio system according to claim 2 or 3, wherein the remote body comprises:
a mode setting unit for setting a Voice Operated Switch (VOX) ON/OFF mode so that the voice signals input to the hands free microphone are automatically sensed and are transmitted to the radio of the other party, and generating a VOX ON/OFF signal when the VOX ON/OFF mode has been set;
a Central Processing Unit (CPU) for receiving the VOX ON/OFF signal from the mode setting unit and requesting a data mediation unit to transmit the VOX ON/OFF signal to the main body; and
the data mediation unit for, when it is requested by the CPU to transmit the VOX ON/OFF signal to the main body, transmitting the VOX ON/OFF signal to a data mediation unit of the main body, and
wherein the main body comprises:
the data mediation unit for receiving the VOX ON/OFF signal from the data mediation unit of the remote body and transmitting the VOX ON/OFF signal to a CPU;
the CPU for, when the VOX ON/OFF signal is received from the data mediation unit of the main body, if the VOX ON/OFF signal is a VOX ON signal, requesting a voice signal input unit to switch a state to a reception waiting state so that the voice signals from the hands free microphone can be received, whereas if the VOX ON/OFF signal is a VOX OFF signal, requesting the voice signal input unit to be released from the reception waiting state; and
the voice signal input unit for, when it is requested by the CPU to switch the state to the reception waiting state, switching its state to the reception waiting state, and receiving the voice signals from the hands free microphone.

5. The automotive remote controlled CB radio system according to any one or more of the preceding claims, in particular according to claim 1, further comprising a control body for generating a control signal required to control an operation of the main body and transmitting the control signal to the main body.

6. The automotive remote controlled CB radio system according to any one or more of the preceding claims, in particular according to claim 1, wherein the main body comprises:
a control signal reception unit for receiving a Push-to-Talk (PTT) signal from the microphone and transmitting the PTT signal to a CPU;
the CPU for, when the PTT signal is received from the control signal reception unit, requesting a voice signal input unit to receive voice signals which are to be transmitted to the radio of the other party; and
the voice signal input unit for, when it is requested by the CPU to receive the voice signals, switching a mode to a voice signal reception mode, and receiving the voice signals, and
wherein the microphone is configured to generate the PTT signal and transmit the PTT signal to the control signal reception unit of the main body, and is configured to receive the voice signals which are to be transmitted to the radio of the other party, and transmit the voice signals to the voice signal input unit when the voice signal input unit switches its mode to the voice signal reception mode in response to the PTT signal.

7. The automotive remote controlled CB radio system according to claim 2 or 3, further comprising a control body for generating a PTT signal and transmitting the PTT signal to the main body,
wherein the main body comprises:
a control signal reception unit for receiving the PTT signal from the control body and transmitting the PTT signal to a CPU;
the CPU for, when the PTT signal is received from the control signal reception unit, requesting a voice signal input unit to switch a state to a reception waiting state so that voice signals to be transmitted to the radio of the other party can be received from the hands free microphone; and
the voice signal input unit for, when it is requested by the CPU to switch the state to the reception waiting state, switching its state to the reception waiting state, and receiving the voice signals from the hands free microphone, and
wherein the hands free microphone receives the voice signals, which are to be transmitted to the radio of the other party, and transmits the voice signals to the voice signal input unit when the voice signal input unit switches its mode to a voice signal reception mode.

8. The automotive remote controlled CB radio system according to claim 5, wherein the main body comprises:
a control signal reception unit for receiving the control signal from the control body and transmitting the control signal to a CPU;
the CPU for, when the control signal is received from the control signal reception unit, requesting a data mediation unit to transmit the control signal to the remote body; and
the data mediation unit for, when it is requested by the CPU to transmit the control signal to the remote body, transmitting the control signal to the remote body, and
wherein the remote body comprises:
a data mediation unit for receiving the control signal from the data mediation unit of the main body and transmitting the control signal to a CPU; and
the CPU for, when the control signal is received from the data mediation unit, setting a mode in response to the control signal, and displaying status information about the mode, which has been set, on the display unit.

9. The automotive remote controlled CB radio system according to any one or more of the preceding claims, in particular according to claim 1, wherein the remote body comprises:
a mode setting unit for selecting a radio broadcast channel and frequency and transmitting information about the selected channel and frequency to a CPU;
the CPU for displaying the information received from the mode setting unit on the display unit, and requesting a data mediation unit to transmit the information to the main body; and
the data mediation unit for transmitting the information, which is requested by the CPU to be transmitted to the main body, to the main body, and
wherein the main body comprises:
a data mediation unit for receiving the information from the data mediation unit of the remote body and transmitting the information to a CPU;
the CPU for requesting a radio signal reception unit to receive radio broadcast signals in response to the information received from the data mediation unit, and for, when the radio signal reception unit receives the radio broadcast signals, requesting the radio signal reception unit to output the received radio broadcast signals to a voice signal output unit;
the radio signal reception unit for, when it is requested by the CPU to receive the radio broadcast signals, receiving radio broadcast signals corresponding to the channel and frequency information; and
the voice signal output unit for, when it is requested by the CPU to output the radio broadcast signals, outputting the radio broadcast signals.

10. The automotive remote controlled CB radio system according to claim 8, wherein:
the control body generates a control signal required to select a radio channel and frequency, and transmits the control signal to the main body,
the remote body is configured such that the CPU thereof sets information about the channel and frequency in response to the control signal received from the data mediation unit of the main body and displays the channel and frequency information on the display unit, and such that when the CPU requests the data mediation unit to transmit the set channel and frequency information to the main body, the data mediation unit transmits the channel and frequency information to the data mediation unit of the main body, and
the main body further comprises:
a radio signal reception unit which is requested by the CPU to receive radio broadcast signals and receives radio broadcast signals corresponding to the channel and frequency information when the data mediation unit receives the channel and frequency information from the data mediation unit of the remote body and transmits the channel and frequency information to the CPU; and
a voice signal output unit which is requested by the CPU to output the radio broadcast signals received from the radio signal reception unit, and outputs the radio broadcast signals.

11. The automotive remote controlled CB radio system according to any one or more of the preceding claims, in particular according to claim 1, wherein the display unit is implemented using a Liquid Crystal Display (LCD) unit.

12. The automotive remote controlled CB radio system according to claim 11, wherein the remote body further comprises:
a backlight unit for implementing various colors and illuminating the display unit;
a mode setting unit for selecting color of the backlight, and transmitting information about the selected color to the CPU; and
a CPU for performing processing such that the display unit is illuminated with the color selected according to the color information received from the mode setting unit.
